# EUROPEAN PATENT APPLICATION

(11) **EP 3 929 914 A1**
(43) Date of publication of application: **29.12.2021**
(21) Application number: 20759222.1
(22) Date of filing: 18.02.2020
(51) Int. Cl.: G10L 13/00, G10H 7/08

(54) **SOUND SIGNAL SYNTHESIS METHOD, GENERATIVE MODEL TRAINING METHOD, SOUND SIGNAL SYNTHESIS SYSTEM, AND PROGRAM**

(30) Priority: 20.02.2019 JP 2019028684
(71) Applicant: YAMAHA CORPORATION, Hamamatsu-shi Shizuoka, 430-8650 (JP)
(72) Inventor: NISHIMURA, Masanari, Hamamatsu-shi, Shizuoka 430-8650 (JP)
(74) Representative: Hoffmann Eitle
(86) International application number: PCT/JP2020/006162
(87) International publication number: WO 2020/171036

(57) **Abstract**

A sound signal synthesis method implemented by a computer sets a piece of pitch notation data that is identified by a pitch name of a sound signal to be synthesized, from among pitch data including pieces of pitch notation data corresponding to pitch names, as a hot value depending on a deviation from the pitch name of the pitch of each sound signal, estimates output data indicative of a sound signal in accordance with the set pitch data, using a generative model, and synthesizes the sound signal according to the output data.

## Description

### TECHNICAL FIELD

The present invention relates to sound source technology for synthesizing sound signals.

### BACKGROUND ART

There have been proposed sound sources that use neural networks (hereafter, "NNs") to generate sound waveforms in accordance with input conditions (hereafter, "Deep Neural Network (DNN) sound sources"), such as an NSynth described in Patent Document 1 or a Neural Parametric Singing Synthesizer (NPSS) described in Non-Patent Document 1. The NSynth generates a sample of a sound signal for each sample cycle in accordance with embedding (embedding vector). The Timbre model of the NPSS generates a spectrum of a sound signal for each frame, depending on pitch and timing information.

### Related Art Document

### Patent Document

Patent Document 1 US Patent Publication No. 10,068,557

### Non-Patent Document

Non-Patent Document 1 Merlijn Blaauw, Jordi Bonada, "A Neural Parametric Singing Synthesizer Modeling Timbre and Expression from Natural Songs," Appl. Sci. 2017, 7, 1313

### SUMMARY OF THE INVENTION

### Problem to be Solved by the Invention

In DNN sound sources, such as an NSynth (Patent Document 1) or an NPSS (Non-Patent Document 1), a pitch of a synthesized sound signal is controlled by pitch data that specify a single desired scale. However, techniques employed for these sound sources do not take account of control of dynamic deviations in a pitch from a scale specified by a note, etc., caused by pitch envelope or vibrato.

In a training phase of a DNN sound source, an NN is trained to estimate output data representative of a sound signal or a waveform spectrum from input pitch data. The DNN sound source will generate vibrato sound signals if trained using vibrato sound signals, and will generate pitch-bend sound signals if trained using pitch-bend sound signals. However, the DNN sound source is not able to control dynamically varying pitch shifts (pitch-bend amounts), such as vibrato or pitch bend, by use of time-varying numerical values.

It is an object of the present disclosure to control dynamic pitch variations of sound signals to be synthesized by use of time-varying numerical values.

### Means of Solving the Problems

A sound signal synthesis method according to one aspect of the present disclosure generates first pitch data indicative of a pitch of a first sound signal to be synthesized; and uses a generative model to estimate output data indicative of the first sound signal based on the generated first pitch data, the generative model having learned a relationship between second pitch data indicative of a pitch of a second sound signal, and the second sound signal. The first pitch data includes a plurality of pieces of pitch notation data corresponding to different pitch names, and the first pitch data is generated by setting, from among the plurality of pieces of pitch notation data, a piece of pitch notation data that corresponds to the pitch of the first sound signal, as a hot value based on a difference between a reference pitch of a pitch name corresponding to the piece of pitch notation data and the pitch of the first sound signal.

A training method of a generative model according to one aspect of the present disclosure prepares pitch data that represents a pitch of a sound signal to be synthesized; and trains the generative model so that output data representing the sound signal is output according to input of the pitch data. The pitch data includes a plurality of pieces of pitch notation data corresponding to different pitch names, and the pitch data is prepared by setting, from among the plurality of pieces of pitch notation data, a piece of pitch notation data that corresponds to the pitch of the sound signal as a hot value based on a difference between a reference pitch of a pitch name corresponding to the piece of pitch notation data and the pitch of the sound signal.

A sound signal synthesis system according to one aspect of the present disclosure is a sound signal synthesis system including: one or more processors; and one or more memories, and the one or more memories are configured to store a generative model that has learned a relationship between second pitch data indicative of a pitch of a second sound signal and the second sound signal, and the one or more processors are configured to: generate first pitch data indicative of a pitch of a first sound signal to be synthesized; and use the generative model to estimate output data indicative of the first sound signal based on the first pitch data. The first pitch data includes a plurality of pieces of pitch notation data corresponding to different pitch names, and the first pitch data is generated by setting, from among the plurality of pieces of first pitch notation data, a piece of pitch notation data that corresponds to the pitch of the first sound signal as a hot value based on a difference between a reference pitch of a pitch name corresponding to the piece of first pitch notation data and the pitch of the first sound signal.

A program according to one aspect of the present disclosure is a program that causes a computer to function as a signal processor configured to generate first pitch data representing a pitch of a first sound signal to be synthesized; and a generator configured to use a generative model to estimate output data indicative of the first sound signal based on the first pitch data, the generative model having learned a relationship between second pitch data indicative of a pitch of a second sound signal, and the second sound signal. The first pitch data includes a plurality of pieces of pitch notation data corresponding to different pitch names, and the first pitch data is generated by setting, from among the plurality of pieces of pitch notation data, a piece of pitch notation data corresponding to the pitch of the first sound signal as a hot value based on a difference between a reference pitch of a pitch name corresponding to the pitch notation data and the pitch of the first sound signal.

### BRIEF DESCRIPTION OF THE DRAWINGS

Fig. 1 is a block diagram of a hardware configuration of a sound signal synthesis system.
Fig. 2 is a block diagram of a functional configuration of the sound signal synthesis system.
Fig. 3 is a diagram explaining pitch data.
Fig. 4 is a diagram explaining processing performed by a trainer and a generator.
Fig. 5 is a diagram explaining pitch data in accordance with one-hot-level notation.
Fig. 6 is a flowchart showing a preparation process.
Fig. 7 is a flowchart showing a sound generation process.
Fig. 8 is a diagram explaining pitch data according to two-hot-level notation.
Fig. 9 is a diagram explaining pitch data according to four-hot-level notation.
Fig. 10 is a diagram showing a modification of a degree of proximity of each pitch name to a respective pitch of a sound signal.

### MODES FOR CARRYING OUT THE INVENTION

### A: First Embodiment

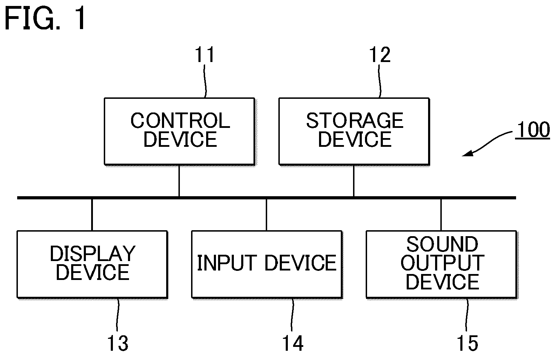

FIG. 1 is a block diagram illustrating a structure of a sound signal synthesis system 100 of the present disclosure. The sound signal synthesis system 100 is realized by a computer system that includes a control device 11, a storage device 12, a display device 13, an input device 14, and a sound output device 15. The sound signal synthesis system 100 is an information terminal, such as a portable phone, smartphone, or personal computer. The sound signal synthesis system 100 can be realized as a single device, or as a plurality of separately configured devices (e.g., a server-client system).

The control device 11 comprises one or more processors that control each of the elements that constitute the sound signal synthesis system 100. Specifically, the control device 11 is constituted of one or more of different types of processors, such as a Central Processing Unit (CPU), Sound Processing Unit (SPU), Digital Signal Processor (DSP), Field Programmable Gate Array (FPGA), Application Specific Integrated Circuit (ASIC), or the like. The control device 11 generates a time-domain sound signal V that represents a waveform of the synthesis sound.

The storage device 12 comprises one or more memories that store programs executed by the control device 11 and various data used by the control device 11. The storage device 12 comprises a known recording medium, such as a magnetic recording medium or a semiconductor recording medium, or a combination of multiple types of recording media. It is of note that a storage device 12 may be provided separate from the sound signal synthesis system 100 (e.g., cloud storage), and the control device 11 may write and read data to and from the storage device 12 via a communication network, such as a mobile communication network or the Internet. In other words, the storage device 12 may be omitted from the sound signal synthesis system 100.

The display device 13 displays calculation results of a program executed by the control device 11. The display device 13 is, for example, a display. The display device 13 may be omitted from the sound signal synthesis system 100.

The input device 14 accepts a user input. The input device 14 is, for example, a touch panel. The input device 14 may be omitted from the sound signal synthesis system 100.

The sound output device 15 plays sound represented by a sound signal V generated by the control device 11. The sound output device 15 is, for example, a speaker or headphones. For convenience, a D/A converter, which converts the sound signal V generated by the control device 11 from digital to analog format, and an amplifier, which amplifies the sound signal V, are not shown. In addition, although Fig. 1 illustrates a configuration in which the sound output device 15 is mounted to the sound signal synthesis system 100, the sound output device 15 may be provided separate from the sound signal synthesis system 100 and connected to the sound signal synthesis system 100 either by wire or wirelessly.

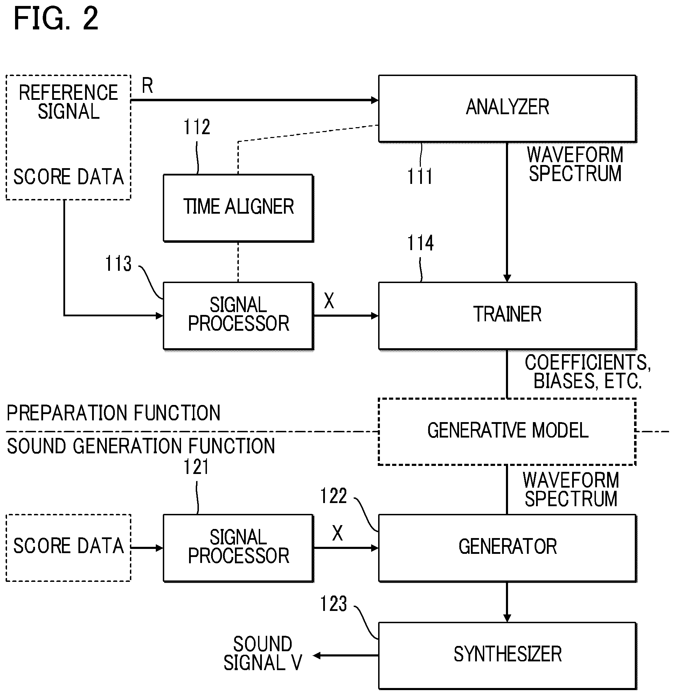

FIG. 2 is a block diagram showing a functional configuration of the sound signal synthesis system 100. By executing a program stored in the storage device 12, the control device 11 realizes a sound generation function (a signal processor 121, a generator 122, and a synthesizer 123) that generates, by use of a generative model, a time-domain sound signal V representative of a sound waveform, such as a voice of a singer singing a song or a sound of an instrument being played. Furthermore, by executing a program stored in the storage device 12, the control device 11 realizes a preparation function (an analyzer 111, a time aligner 112, a signal processor 113, and a trainer 114) for preparing a generative model used for generating sound signals V. The functions of the control device 11 may be realized by a set of multiple devices (i.e., a system), or some or all of the functions of the control device 11 may be realized by dedicated electronic circuitry (e.g., signal processing circuitry).

Description will first be given of pitch data XI; a generative model that generates output data in accordance with the pitch data XI; and reference signals R used to train the generative model.

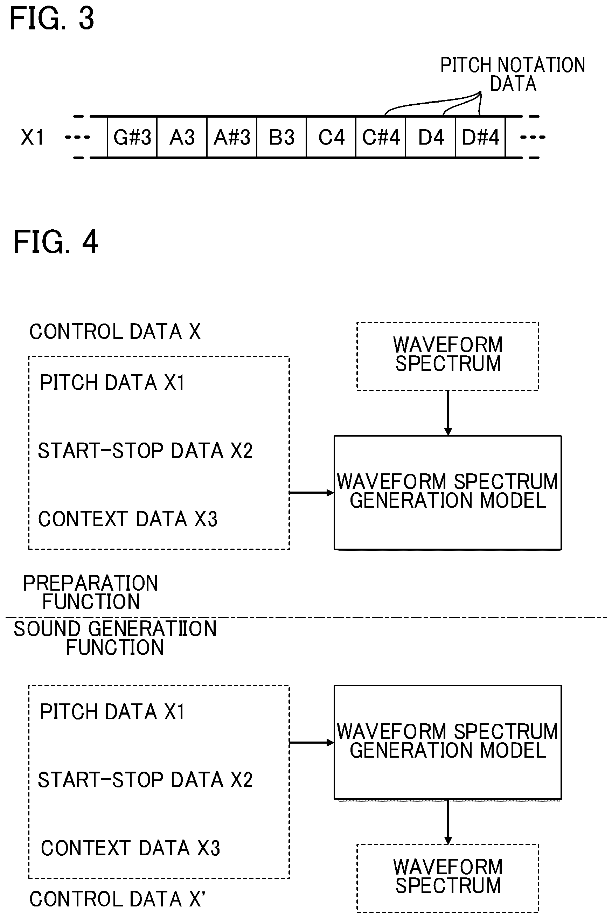

The pitch data X1 indicates a pitch (hereafter, "target pitch") P of a sound signal (reference signal R or sound signal V). Fig. 3 shows an example of the pitch data X1. The pitch data X1 comprises a plurality (M) of pieces of pitch notation data (M is a natural number of two or more) corresponding to different pitch names (... "G#3", "A3", "A#3", "B3", "C4", "C#4", "D4", ...). If is of note that, in a case where more than one pitch names have a common symbol used to represent the same pitch name (C, D, E, ...), pitch names in different octaves are distinguished as different pitch names.

Of the M pieces of pitch notation data constituting the pitch data X1, a piece of pitch notation data that corresponds to a target pitch P (hereafter, "valid pitch notation data") is set as a deviation value depending on a difference in pitch (deviation) between the target pitch P and a predetermined pitch (hereafter, "reference pitch") Q corresponding to the pitch name indicated by the valid pitch notation data. The deviation value is an example of a hot value. The reference pitch Q corresponding to a pitch name is a standard pitch corresponding to that pitch name. On the other hand, of the M pieces of pitch notation data constituting the pitch data X1, each of (M - 1) pieces of pitch notation data other than the valid pitch notation data is set as a constant (e.g., 0) indicating that the respective pitch is irrelevant to the target pitch P. The constant indicating that the respective pitch is irrelevant to the target pitch P is an example of a cold value. As will be understood from the above explanation, the pitch data X1 specifies both a pitch name corresponding to the target pitch P of a sound signal (reference signal R or sound signal V) and the deviation value of the target pitch P from the reference pitch Q of the pitch name.

The generative model is a statistical model for generating a series of waveform spectra (e.g., mel spectrogram, or feature amount such as a fundamental frequency) of a sound signal V in accordance with the control data X, which includes the pitch data X1. The control data X specifies conditions of a sound signal V to be synthesized. The characteristics of the generative model are defined by more than one variable (coefficients, biases, etc.,) stored in the storage device 12. The statistical model is a neural network used for estimating a waveform spectrum. The neural network may be of a regression type, such as WaveNet (TM), which estimates a probability density distribution of a current sample based on previous samples of the sound signal V. The algorithm may be freely selected. For example, the algorithm may be a Convolutional-Neural-Network (CNN) type, a Recurrent-Neural-Network (RNN) type, or a combination of the two. Furthermore, the algorithm may be of a type that includes an additional element, such as Long Short-Term Memory (LSTM) or ATTENTION. The variables of the generative model are established by training based on training data prepared by the preparation function (described later). The generative model in which the variables are established is used to generate the sound signal V in the sound generation function (described later).

To train the generative model, there are stored in the storage device 12, multiple pairs of a sound signal (hereafter, "reference signal") R and score data, the reference signal R being indicative of a time-domain waveform of a score played by a player, and the score data being representative of the score. The score data in one pair includes a series of notes. The reference signal R corresponding to the score data in the same pair contains a series of waveform segments corresponding to the series of notes of the score represented by the score data. The reference signal R comprises a series of samples of sample cycles (e.g., at a sample rate of 48 kHz) and is a time-domain signal representative of a sound waveform. The performance of the score may be realized by human instrumental playing, by singing by a singer, or by automated instrumental playing. Generation of a high quality sound by machine learning generally requires a large volume of training data obtained by advance recording of a large number of sound signals of a target instrument or a target player, etc., for storage in the storage device 12 as reference signals R.

The preparation function illustrated in the upper section of Fig. 2 is described below. The analyzer 111 calculates, for each of reference signals R corresponding to different scores, a frequency-domain spectrum (hereafter, "waveform spectrum") for each frame on a time axis for each reference signal R that is in correspondence with a score. For example, a known frequency analysis, such as a discrete Fourier transform, is used to calculate a waveform spectrum of the reference signal R. The waveform spectrum includes acoustic features such as fundamental frequencies.

The time aligner 112 aligns, based on information such as waveform spectra obtained by the analyzer 111, start and end points of each of sound production units in score data for each reference signal R, with start and end points of a waveform segment corresponding to the sound production unit in the reference signal R. A sound production unit comprises, for example, a single note having a specified pitch and a specified sound duration. A single note may be divided into more than one sound production units by dividing the note at a point where waveform characteristics, such as those of tone, change.

The signal processor 113 generates, based on the information of the sound production units of the score data, timings of which are aligned with those in each reference signal R, control data X for each time t in each frame, the control data X corresponding to the waveform segment of the time t in the reference signal R. The control data X generated by the signal processor 113 specifies the conditions of a reference signal R, as described above.

The control data X includes pitch data X1, start-stop data X2, and context data X3, as illustrated in Fig. 4. The pitch data X1 represents a target pitch P in the corresponding waveform segment of the reference signal R. The start-stop data X2 represents the start (attack) and end (release) periods of each waveform segment. The context data X3 of one frame in a waveform segment corresponding to one note represents relations (i.e., context) between different sound production units, such as a difference in pitch between the note and a previous or following note, or information representative of a relative position of the note within the score. The control data X may also contain other information such as that pertaining to instruments, singers, or techniques.

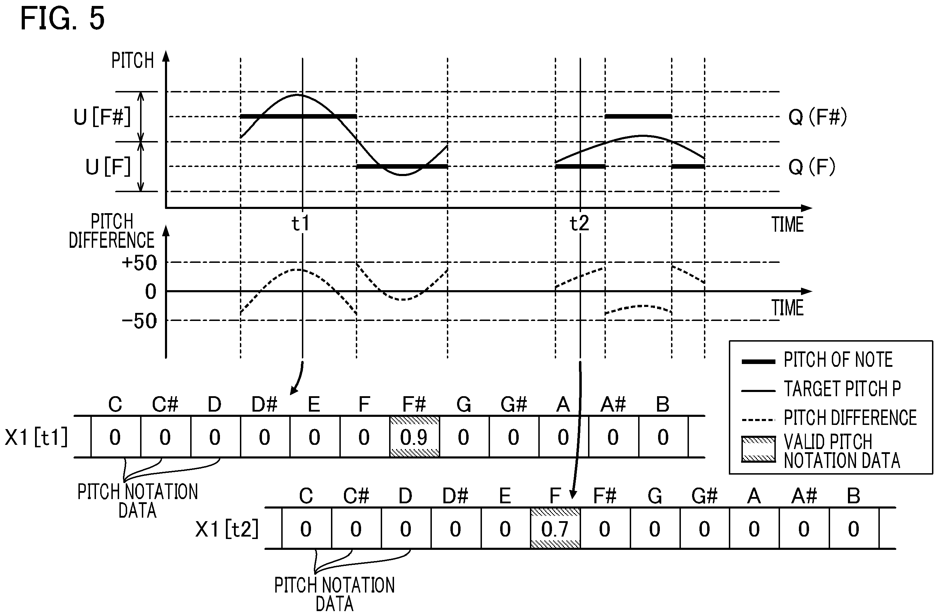

As described above, of the M pieces of pitch notation data constituting the pitch data X1, one piece of valid pitch notation data corresponding to the target pitch P of a sound signal (reference signal R or sound signal V) is set as a deviation value depending on the difference in pitch of the target pitch P relative to the reference pitch Q corresponding to the pitch name. The pitch data X1 that follows this notation is referred to as the pitch data XI in one-hot-level notation. The signal processor 113 (control device 11) sets, from among the M pieces of pitch notation data of the pitch data X1, one piece of valid pitch notation data that corresponds to the target pitch P of the reference signal R, to the deviation value depending on the difference in pitch between the reference pitch Q corresponding to the pitch name and the target pitch P. Fig. 5 shows an example of the setting.

In the upper section of Fig. 5, there is shown a series of notes that constitute a score represented by score data and pitches of the played sounds (target pitches P) of the score on a 2D plane with a time axis (horizontal axis) and a pitch axis (vertical axis) set thereon. In the example shown in Fig. 5, note F#, note F, rest, note F, note F#, and note F are played in the listed order. The target pitch P in Fig. 5 is, for example, the pitch of the played sound produced by an instrument for which the pitch continuously varies.

As illustrated in Fig. 5, the pitch axis is divided into a plurality of ranges (hereafter, "unit ranges") U corresponding to different pitch names. The reference pitch Q corresponding to each pitch name corresponds to, for example, a midpoint of the unit range U corresponding to that pitch name. For example, the reference pitch Q(F#) corresponding to pitch name F# may be the midpoint of the unit range U(F#) corresponding to pitch name F#. As will be understood from Fig. 5, a piece of music is played so that the target pitch P approaches the reference pitch Q of each note. While the reference pitch Q corresponding to each pitch name is set discretely on the pitch axis, the target pitch P varies continuously over time. Accordingly, the target pitch P deviates from the reference pitch Q.

Shown in the middle section of Fig. 5 is a graph representing temporal variations in the numerical value represented by pieces of pitch notation data in the pitch data X1. The numerical value 0 on the vertical axis in the middle section of Fig. 5 is a reference pitch Q corresponding to the pitch name. In a case that the target pitch P is within the unit range U of a pitch name, a piece of pitch notation data corresponding to that pitch name is selected as the valid pitch notation data from among the M pieces of pitch notation data in the pitch data X1, and the valid pitch notation data is set as the deviation value from the reference pitch Q.

The deviation value represented by the valid pitch notation data is a relative value of the target pitch P to the reference pitch Q (= 0) corresponding to the pitch name of the valid pitch notation data. Since the width of the unit range U corresponding to one pitch name is 100 cents (corresponding to a semitone), the difference in pitch between the target pitch P and the reference pitch Q is within a range of ±50 cents. The deviation value set in the valid pitch notation data takes any value in a range of from 0 to 1. Correspondences between the pitch difference and the deviation value may be freely configured. For example, the range of from 0 to 1 in the deviation value may correspond to a pitch difference from -50 cents to +50 cents. For example, a deviation value 0 may correspond to a pitch difference -50 cents; a deviation value 0.5 to a pitch difference 0 cents; and a deviation value 1 to a pitch difference +50 cents.

As illustrated in Fig. 5, at time t1 on the time axis, the target pitch P is within the unit range U(F#) corresponding to pitch name F#, and the pitch difference from the reference pitch Q(F#) corresponding to pitch name F# is +40 cents. Therefore, at time t1, from among the M pieces of pitch notation data in the pitch data X1, the deviation value of one piece of valid pitch notation data corresponding to pitch name F# is set as 0.9 corresponding to a pitch difference +40 cents, and the remainder (M - 1) pieces of pitch notation data are set as 0 (cold value).

At time t2, the target pitch P is within the unit range U(F) corresponding to pitch name F, and the pitch difference from the reference pitch Q(F) corresponding to pitch name F is +20 cents. Therefore, at time t2, from among the M pieces of pitch notation data in pitch data X1, the deviation value of one piece of valid pitch notation data corresponding to pitch name F is set as 0.7, which corresponds to a pitch difference +20 cents.

The correspondences between the pitch difference and the deviation value are not limited to the above. For example, the range of the deviation value from 0.2 to 1 can be mapped to the range of the pitch difference from -50 cents to +50 cents. Further, for example, a deviation value 0.2 may correspond to a pitch difference -50 cents; a deviation value 0.6 to a pitch difference 0 cents; and a deviation value 1 to a pitch difference +50 cents. Alternatively, the relationships between (i) the positive and negative deviation values and (ii) the positive and negative pitch differences may be inverted, and the range of deviation values from 0.2 to 1 may be mapped to the range of pitch difference from +50 cents to -50 cents.

As a result of the processing by the analyzer 111 and the signal processor 113, pieces of sound production unit data for training a generative model are prepared from pairs of a reference signal R and score data. Each piece of sound production unit data comprises a pair of control data X and a waveform spectrum. The pieces of sound production unit data are divided, prior to training by the trainer 114, into a training dataset for training the generative model and a test dataset for testing the generative model. A majority of the sound production unit data are used as a training dataset with the remainder being used as a test dataset. Training with the training dataset is performed by dividing the pieces of sound production unit data into batches, with each batch consisting of a predetermined number of frames, and the training is performed on a per-batch-basis in order for all the batches.

As illustrated in the upper section of Fig. 4, the trainer 114 receives the training dataset to train the generative model by using the waveform spectra of the sound production units and control data X of each batch in order. The generative model estimates, for each frame (time t), output data representative of a waveform spectrum. The output data may indicate a probability density distribution of each of components constituting a waveform spectrum, or may be a value of each component. By inputting the control data X for each of the pieces of the sound production unit data for a whole batch to the generative model, the trainer 114 is able to estimate a series of output data corresponding to the control data X. The trainer 114 calculates a loss function L (cumulative value for one batch) based on the estimated output data and corresponding waveform spectrum (i.e., ground truth) of the training dataset. Then, the trainer 114 optimizes the variables of the generative model so that the loss function L is minimized. For example, as the loss function L there may be used a cross entropy function or the like in a case that the output data comprises a probability density distribution, and may be used a squared error function or the like in a case that the output data comprise the value of the waveform spectrum. The trainer 114 repeats the above training using the training dataset until the loss function L calculated for the test dataset is reduced to have a sufficiently small value, or the change between two consecutive loss functions L is sufficiently reduced. The generative model thus established has learned the relationship that potentially exists between the control data X for each time t and a waveform spectrum that corresponds to the time t within a reference signal R. By use of this generative model, the generator 122 is able to generate a high quality waveform spectrum for control data X of an unknown sound signal V.

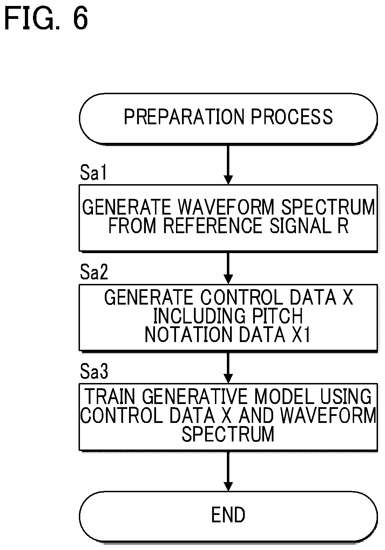

FIG. 6 is a flowchart showing a preparation process. The preparation process is initiated, for example, by an instruction from a user of the sound signal synthesis system 100.

When the preparation process is started, the control device 11 (analyzer 111) generates a waveform spectrum for each waveform segment from each of the reference signals R (Sa1). Next, the control device 11 (time aligner 112 and signal processor 113) generates, from score data that corresponds to the waveform segment, control data X including the pitch data XI of a sound production unit that corresponds to the waveform segment (Sa2). The control device 11 (trainer 114) trains a generative model using the control data X for each sound production unit at each time t and the waveform spectrum corresponding to the sound production unit, and establishes the variables of the generative model (Sa3).

Here, the generative model is trained using, as input data, control data X including pitch data XI indicative of a deviation value relative to the reference pitch Q of each pitch name. Therefore, the generative model established by the training has learned a potential relationship between the deviation value of the pitch indicated by the control data X and the waveform spectrum of the sound signal (reference signal R). Consequently, with an input of control data including the pitch data X1 specifying a pitch name and a deviation value, the generative model is able to generate a sound signal V with a pitch in accordance with the specified pitch name and deviation.

The inventor of the present application trained as a comparative example a generative model using, as input data, control data that includes, in parallel, conventional one-hot pitch data indicative of a pitch name of a sound signal and bend data indicative of a pitch deviation of the sound signal relative to the reference pitch Q of the pitch name. A sound signal generated using the generative model established by such training followed a pitch indicated by the pitch data. However, the sound signal did not stably follow the deviation indicated by the bend data. This can be attributed to the fact that an attempt was made to control the pitch, which is one of the features of a sound signal generated by the generative model by use of two different types of data, namely, the pitch data and the bend data.

Description is next given of a sound generation function illustrated in the lower section of Fig. 2. The sound generation function generates sound signals V using the generative model. The signal processor 121, like the signal processor 113, generates control data X based on a series of sound production units represented by score data to be played, and outputs the generated control data X to the generator 122. The control data X represents the conditions of the sound production units at respective points in time t of the score data (i.e., conditions of a sound signal V to be synthesized). Specifically, the control data X includes pitch data X1, start-stop data X2, and context data X3. While the pitch data X1 generated by the signal processor 113 represents the target pitch P of a reference signal R, the pitch data X1 generated by the signal processor 121 represents a target pitch P of the sound signal V to be synthesized. However, the processing executed by the signal processor 113 and the processing executed by the signal processor 121 are substantially the same, and the format of the pitch data X1 generated by the signal processor 113 and the format of the pitch data X1 generated by the signal processor 121 are the same. The control data X may also include other information, such as that pertaining to instruments, singers, or techniques.

The generator 122 generates a series of waveform spectra in accordance with the control data X by use of a generative model in which the variables are established, as illustrated in the lower section of Fig. 4. The generator 122 estimates output data indicating a waveform spectrum that accords with the control data X for each frame (time t) by use of the generative model. In a case that the estimated output data represents the probability density distribution of each of components constituting the waveform spectrum, the generator 122 generates a random number that follows the probability density distribution of the component and outputs the random number as the value of the component of the waveform spectrum. In a case that the estimated output data represents the values of multiple components, the component values are output.

The synthesizer 123 receives a series of the waveform spectra in the frequency domain and synthesizes a sound signal V in the time domain in accordance with the series of the waveform spectra. The synthesizer 123 is a so-called vocoder. For example, the synthesizer 123 synthesizes the sound signal V by obtaining a minimum phase spectrum from a waveform spectrum and then performing an inverse Fourier transform on the waveform spectrum and the phase spectrum. Alternatively, a neural vocoder that has learned relationships that potentially exist between the waveform spectra and sound signals V is used to directly synthesize the sound signal V from the waveform spectrum.

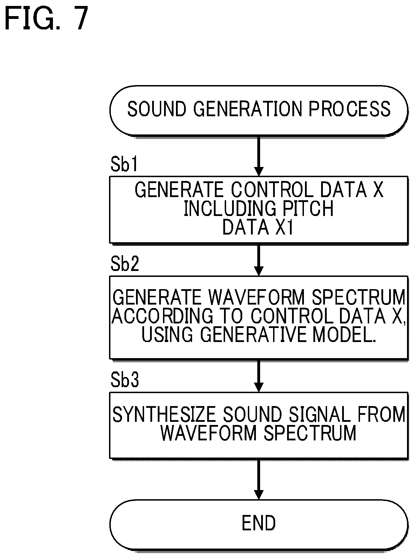

FIG. 7 is a flowchart of a sound generation process for each sound production unit. The sound generation process is initialized in response to an instruction from a user of the sound signal synthesis system 100, for example, and is performed at each time t to generate a sound signal V of a frame corresponding to the time t. The time t may progress at substantially the same speed as a real time, or may progress faster or slower than the real time (i.e., may progress at a different speed than the real time).

When the sound generation process for a certain time t is started, the control device 11 (signal processor 121) generates control data X for that time t based on the score data (Sb1). The control device 11 (generator 122) subsequently generates a waveform spectrum of the sound signal V of that time t in accordance with the generated control data X by use of the generative model (Sb2). Then, the control device 11 (synthesizer 123) synthesizes the sound signal V of a frame that corresponds to that time t in accordance with the generated waveform spectrum (Sb3). The above process is sequentially performed for each time t of the score data, whereby a sound signal V corresponding to the score data is generated.

In the first embodiment, a piece of pitch data X1 specifies the target pitch P of a sound signal V to be synthesized, and the deviation value corresponding to the pitch difference between the target pitch P and the reference pitch Q of the pitch name. Then, the generator 122, using the generative model supplied with control data X including the pitch data X1 as input data, generates a sound signal V of a pitch corresponding to the pitch name and the deviation value specified by the pitch data X1. Thus, the pitch of the generated sound signal V closely follows changes in a pitch name specified by the pitch data X1 and a deviation value relative to the reference pitch Q of the pitch name. For example, by dynamically changing the deviation value indicated by the pitch data X1, dynamic pitch variations, such as vibrato or pitch bend, can be added to the generated sound signal V.

### B: Second Embodiment

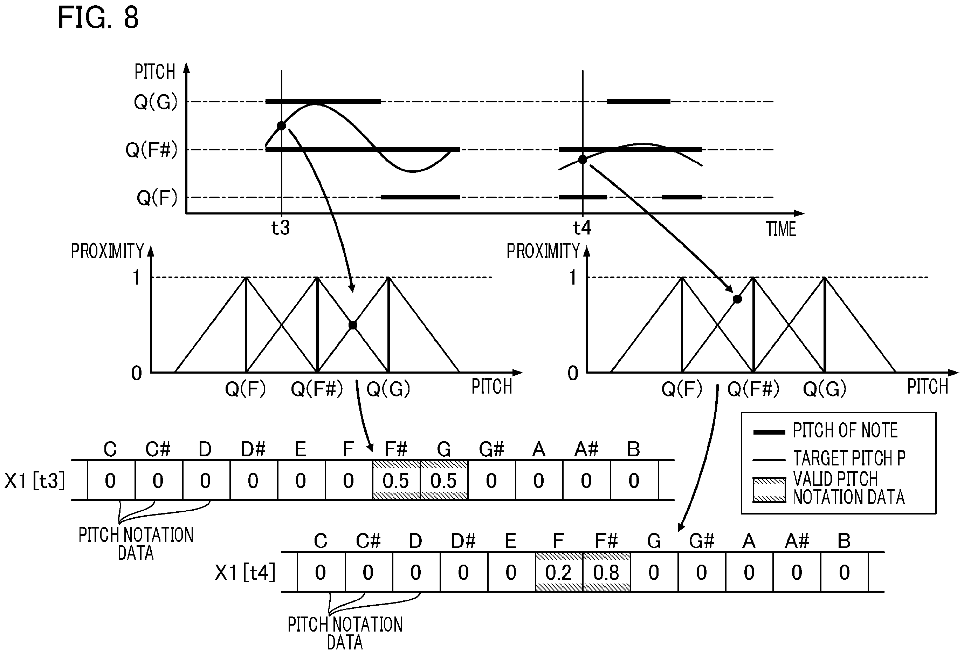

In the second embodiment, instead of the pitch data X1 of the first embodiment in one-hot-level notation, the pitch data X1 in two-hot-level notation illustrated in Fig. 8 is used for input to the generative model. The configuration of a sound signal synthesis system 100 and a functional configuration of the control device 11 of the second embodiment are basically the same as those of the first embodiment.

In the pitch data X1 in two-hot-level notation, each of two pieces of valid pitch notation data corresponding to a target pitch P of a sound signal (reference signal R or sound signal V) from among the M pieces of pitch data corresponding to different pitch names is set as a hot value depending on the difference in pitch between the target pitch P and a reference pitch Q corresponding to the pitch name of the valid pitch notation data. The signal processor 113 or 121 (control device 11) selects a piece of pitch notation data corresponding to each of the two reference pitches Q sandwiching the target pitch P of the sound signal (reference signal R or sound signal V) as the valid pitch notation data from among the M pieces of pitch notation data of the pitch data X1. The signal processor 113 or 121 then sets each of the two pieces of valid pitch notation data as a degree of proximity (an example of a hot value) between the target pitch P and the reference pitch Q corresponding to the pitch name of the piece of pitch notation data. In other words, the two-hot-level notation is a notation method in which two pieces of valid pitch notation data from among the M pieces of pitch notation data constituting the pitch data XI are set as hot values (degrees of proximity) and the remainder (M - 2) pieces of pitch notation data are set as cold values (e.g., 0).

In the upper section of Fig. 8, there is shown a series of notes that constitute a score represented by score data and pitches of the played sounds (target pitches P) of the score on a 2D plane with a time axis (horizontal axis) and a pitch axis (vertical axis) set thereon. As will be seen from Fig. 8, from among the M pieces of pitch notation data constituting the pitch data X1, a piece of pitch notation data that corresponds to a reference pitch Q closest to the target pitch P and a piece of pitch notation data that corresponds to the second closest reference pitch Q are selected as valid pitch notation data.

In the middle section of Fig. 8, there is shown a degree of proximity between the reference pitch Q corresponding to the respective pitch name in each piece of pitch notation data and the target pitch P. Here, the degree of proximity may be of any value within the range of from 0 to 1. Specifically, the degree of proximity is 1 when the target pitch P matches the reference pitch Q of a certain pitch name. In a case that the difference in pitch between the target pitch P and the reference pitch Q of the pitch name is x cents, the degree of proximity is (100 - x) / 100. In other words, the larger the difference in pitch between the target pitch P and the reference pitch Q, the smaller the value of the degree of proximity. For example, the degree of proximity is 0 if the target pitch P is more than a half tone away from the reference pitch Q of a certain pitch name.

At time t3 in Fig. 8, the target pitch P is located between a reference pitch Q(G) corresponding to pitch name G and a reference pitch Q(F#) corresponding to pitch name F#. Therefore, from among the M pieces of pitch notation data of the pitch data X1, a piece of pitch notation data corresponding to pitch name G and a piece of pitch notation data corresponding to pitch name F# are selected as the pieces of valid pitch notation data. At time t3, the difference in pitch between the reference pitch Q(G) and the target pitch P is 50 cents, and the degree of proximity of the piece of valid pitch notation data corresponding to pitch name G is set as 0.5. At time t3, the difference in pitch between the reference pitch Q(F#) and the target pitch P is also 50 cents, and the degree of proximity of the piece of valid pitch notation data corresponding to pitch name F# is also set as 0.5. As described above, at time t3, the signal processor 113 or 121 of the second embodiment sets the piece of valid pitch notation data corresponding to pitch name G as 0.5, the piece of valid pitch notation data corresponding to pitch name F# as 0.5, and the remainder (M - 2) pieces of pitch notation data as 0 (cold values), from among the M pieces of pitch notation data constituting the pitch data X1.

On the other hand, at time t4 shown in Fig. 8, the target pitch P is located between a reference pitch Q(F) corresponding to pitch name F and a reference pitch Q(F#) corresponding to pitch name F#. Therefore, from among the M pieces of pitch notation data of the pitch data X1, a piece of pitch notation data corresponding to pitch name F and a piece of pitch notation data corresponding to pitch name F# are selected as the pieces of valid pitch notation data. At time t4, the difference in pitch between the reference pitch Q(F) and the target pitch P is 80 cents, and the degree of proximity of the piece of valid pitch notation data corresponding to pitch name F is set as 0.2. Also, at time t4, the difference in pitch between the reference pitch Q (F#) and the target pitch P is 20 cents, and the degree of proximity of the piece of valid pitch notation data corresponding to pitch name F# is set as 0.8. Thus, at time t4, the signal processor 113 or 121 of the second embodiment sets the piece of valid pitch notation data corresponding to pitch name F as 0.2, the piece of valid pitch notation data corresponding to pitch name F# as 0.8, and the remainder (M - 2) pieces of pitch notation data as 0 (cold values), from among the M pieces of pitch notation data constituting the pitch data X1.

The trainer 114 trains the generative model so that, with control data X, including pitch data X1 in the two-hot-level notation, as input data, the generative model generates output data indicative of a waveform spectrum corresponding to the control data X. The generative model, for which variables are established, has learned relationships that potentially exist between control data X in the pieces of sound generation unit data and the waveform spectra of a reference signal R.

Using the established generative model, the generator 122 generates a waveform spectrum in accordance with the control data X, including the pitch data X1 in two-hot-level notation, at each time t. The synthesizer 123 synthesizes a sound signal V in the time domain in accordance with the series of the waveform spectra generated by the generator 122, as in the first embodiment.

In the second embodiment, the generative model can be used to generate a sound signal V that closely follows the variations in the target sound level P represented by the pitch data X1 in two-hot-level notation.

### C: Third Embodiment

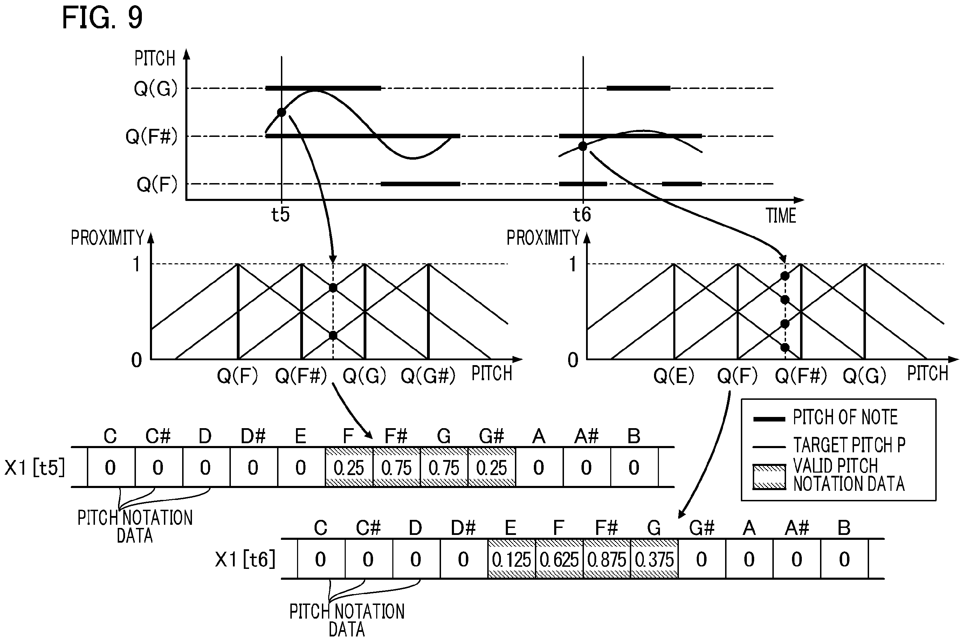

In the second embodiment, the two pieces of valid pitch notation data corresponding to the target pitch P are set as hot values, but the number of pieces of valid pitch notation data to be set as hot values among the M pieces of pitch notation data constituting the pitch data X1 may be freely selected. In the third embodiment, instead of the pitch data X1 in two-hot-level notation in the second embodiment, the pitch data X1 in four-hot-level notation illustrated in Fig. 9 are used as input data to the generative model. The configuration of the sound signal synthesis system 100 and the functional configuration of the control device 11 of the third embodiment are basically the same as those of the first and second embodiments.

In the pitch data X1 in four-hot-level notation, from among the M pieces of pitch notation data corresponding to different pitch names, four pieces of pitch notation data corresponding to the target pitch P of the sound signal (reference signal R or sound signal V) are selected as valid pitch notation data. Specifically, selected as valid pitch notation data are two pieces of pitch notation data corresponding to the respective two reference pitches Q sandwiching the target pitch P, and, adjacent to each of the two pieces of pitch notation data, another two pieces of pitch notation data one on each side. In other words, four pieces of pitch notation data close to the target pitch P are selected as valid pitch notation data. Each of the four pieces of valid pitch notation data is set as a hot value that corresponds to a degree of proximity between the target pitch P and the reference pitch Q corresponding to the pitch name of the piece of valid pitch notation data. Accordingly, the four-hot-level notation is a notation method in which four pieces of valid pitch notation data from among the M pieces of pitch notation data constituting the pitch data XI are set as hot values (degrees of proximity) and the remainder (M - 4) pieces of pitch notation data are set as cold values (e.g., 0). The signal processor 113 or 121 (control device 11) generates the pitch data XI described above.

In the upper section of Fig. 9, as in the second embodiment, there is shown a series of notes that constitute a score represented by score data and pitches of the played sounds (target pitches P) of the score on a 2D plane with a time axis (horizontal axis) and a pitch axis (vertical axis) set thereon. As will be seen from Fig. 9, from among the M pieces of pitch notation data constituting the pitch data XI, four pieces of pitch notation data that correspond to four reference pitches Q close to the target pitch P are selected as valid pitch notation data.

In the middle section of Fig. 9, there is shown a degree of proximity between the reference pitch Q corresponding to the respective pitch name in each piece of pitch notation data and the target pitch P. Here, the degree of proximity may take any value within the range of from 0 to 1, as in the second embodiment. Specifically, the degree of proximity is 1 when the target pitch P matches the reference pitch Q of a certain pitch name. In a case that the difference in pitch between the target pitch P and the reference pitch Q of the pitch name is x cents, the degree of proximity is (200 - x) / 200. In other words, as in the second embodiment, the larger the difference in pitch between the target pitch P and the reference pitch Q, the smaller the value of the degree of proximity. For example, the degree of proximity is 0 if the target pitch P is more than a full tone away from the reference pitch Q of a certain pitch name.

At time t5 in Fig. 9, the target pitch P is located between the reference pitch Q(G) corresponding to pitch name G and the reference pitch Q(F#) corresponding to pitch name F#. Therefore, among the M pieces of pitch notation data in the pitch data X1, four pieces of pitch notation data respectively corresponding to pitch name G, pitch name F#, pitch name G# adjacent to pitch name G on the higher side, and pitch name F adjacent to pitch name F# on the lower side, are selected as valid pitch notation data. At time t5, the difference in pitch between the reference pitch Q(G) and the target pitch P is 50 cents, and the degree of proximity of a piece of valid pitch notation data corresponding to pitch name G is set as 0.75. Similarly, since the difference in pitch between the reference pitch Q(F#) and the target pitch P is 50 cents, the degree of proximity of a piece of valid pitch notation data corresponding to pitch name F# is set as 0.75. Since the difference in pitch between the reference pitch Q(F) and the target pitch P is 150 cents, the degree of proximity of a piece of valid pitch notation data corresponding to pitch name F is set as 0.25. Similarly, since the difference in pitch between the reference pitch Q (G#) and the target pitch P is 150 cents, the degree of proximity of a piece of valid pitch notation data corresponding to pitch name G# is set as 0.25. As described above, at time t5, the signal processor 113 or 121 of the third embodiment sets two pieces of valid pitch notation data (one corresponding to pitch name G and the other to pitch name F#) as 0.5, two pieces of valid pitch notation data (one corresponding to pitch name F and the other to pitch name G#) as 0.25, and the remainder (M - 4) pieces of pitch notation data as 0 (cold values), from among the M pieces of pitch notation data constituting the pitch data X1.

At time t6, the target pitch P is located between the reference pitch Q(F#) corresponding to pitch name F# and the reference pitch Q(F) corresponding to pitch name F. Therefore, among the M pieces of pitch notation data in the pitch data X1, four pieces of pitch notation data respectively corresponding to pitch name F#, pitch name F, pitch name G adjacent to pitch name F# on the higher side, and pitch name E adjacent to pitch name F on the lower side are selected as valid pitch notation data. At time t6, the difference in pitch between the reference pitch Q(F#) and the target pitch P is 25 cents, and the degree of proximity of a piece of valid pitch notation data corresponding to pitch name F# is set as 0.875. Since the difference in pitch between the reference pitch Q(F) and the target pitch P is 75 cents, the degree of proximity of a piece of valid pitch notation data corresponding to pitch name F is set as 0.625. Since the difference in pitch between the reference pitch Q(G) and the target pitch P is 125 cents, the degree of proximity of a piece of valid pitch notation data corresponding to pitch name G is set as 0.375. Also, since the difference in pitch between the reference pitch Q(E) and the target pitch P is 175 cents, the degree of proximity of a piece of valid pitch notation data corresponding to pitch name E is set as 0.125. As described above, at the time t6, the signal processor 113 or 121 of the third embodiment sets, from among the M pieces of pitch notation data constituting the pitch data XI, the piece of valid pitch notation data corresponding to pitch name F# as 0.875, the piece of valid pitch notation data corresponding to pitch name F as 0.625, the piece of valid pitch notation data corresponding to pitch name G as 0.375, the piece of valid pitch notation data corresponding to pitch name E as 0.125, and the remainder (M - 4) pieces of pitch notation data as 0 (cold values).

The trainer 114 trains the generative model so that, with control data X, including pitch data XI in four-hot-level notation, as input data, the generative model generates output data indicative of a waveform spectrum corresponding to the control data X. The generative model, for which variables are established, has learned relationships that potentially exist between control data X in the pieces of sound generation unit data and the waveform spectra of a reference signal R.

Using the established generative model, the generator 122 generates a waveform spectrum according to the control data X, including the pitch data X1 in two-hot-level notation, at each time t. The synthesizer 123 synthesizes a sound signal V in the time domain in accordance with the series of the waveform spectra generated by the generator 122, as in the first embodiment.

In the third embodiment, the generative model can be used to generate a sound signal V that closely follows the variations in the target sound level P represented by the pitch data XI in four-hot-level notation.

The one-hot-level notation illustrated in the first embodiment, the two-hot-level notation illustrated in the second embodiment, and the four-hot-level notation illustrated in the third embodiment are generalized as N-hot-level notation, where N is a natural number equal to or greater than 1, with the number of pieces of valid pitch notation data in the pitch data X1 being N. In the N-hot-level notation, from among the M pieces of pitch notation data constituting the pitch data X1, the N pieces of valid pitch notation data corresponding to the target pitch P are set as hot values (deviation values or degrees of proximity) that depend on the difference in pitch between the reference pitch Q of the pitch name and the target pitch P, and the remainder (M - N) pieces of pitch notation data are set as cold values (e.g., 0). Given that the difference in pitch between the target pitch P and the reference pitch Q of a certain pitch name is x cents, the degree of proximity is expressed as (50 × N - x) / 50 × N. However, the formula for calculating the degree of proximity is not limited to the above example. As described above, the number N of the pieces of valid pitch notation data used to represent the target pitch P may be freely selected.

### D: Fourth Embodiment

The generator 122 in the first, the second, and the third embodiment generates a waveform spectrum. In the fourth embodiment, the generator 122 generates a sound signal V by use of a generative model. The functional configuration of a sound signal synthesis system 100 according to the fourth embodiment is basically the same as that shown in Fig. 2, but the synthesizer 123 is not required. The trainer 114 trains the generative model using reference signals R, and the generator 122 generates a sound signal V using the generative model. A piece of sound production unit data used for training in the fourth embodiment comprises a pair of a piece of control data X for the respective sound production unit and a waveform segment of a reference signal R (i.e., a sample of the reference signal R).

The trainer 114 of the fourth embodiment receives the training dataset and trains the generative model by using in order: the control data X; and the waveform segments of the sound production units of each batch of the training dataset. The generative model estimates output data representative of a sample of the sound signal V at each sample cycle (time t). The trainer 114 calculates a loss function L (cumulative value for one batch) based on a series of the output data estimated from the control data X and the corresponding waveform segments of the training dataset, and optimizes the variables of the generative model so that the loss function L is minimized. The generative model thus established has learned relationships that potentially exist between the control data X in each of the pieces of sound production unit data and the waveform segments of the reference signal R.

The generator 122 of the fourth embodiment generates a sound signal V in accordance with control data X by use of the established generative model. Thus, the generator 122 estimates, at each sample cycle (time t), output data indicative of a sample of the sound signal V in accordance with the control data X. In a case that the output data represents a probability density distribution for each of a plurality of samples, the generator 122 generates a random number that follows a probability density distribution of the component and outputs the random number as a sample of the sound signal V. In a case that the output data represents the values of samples, a series of the samples is output as a sound signal V.

### E: Fifth Embodiment

In the embodiment shown in FIG. 2, the sound generation function generates a sound signal V based on the information of a series of sound production units in the score data. However, a sound signal V may be generated in real time based on the information of sound production units supplied from a musical keyboard or the like. Specifically, the signal processor 121 generates control data X for each time t based on the information of one or more sound production units supplied up to that time t. It is not practically possible to include the information of a future sound production unit in the context data X3 contained in the control data X, but the information of a future sound production unit may be predicted from the past information and included in the context data X3.

### F: Modifications

In the first embodiment, among the M pieces of pitch notation data constituting the pitch data X1, a piece of pitch notation data corresponding to a reference pitch Q that is close to the target pitch P is selected as valid pitch notation data, but a piece of pitch notation data corresponding to a reference pitch Q that is far from the target pitch P may be selected as the valid pitch notation data. In that case, the deviation value of the first embodiment is scaled so that a difference in pitch exceeding ±50 cents can be represented.

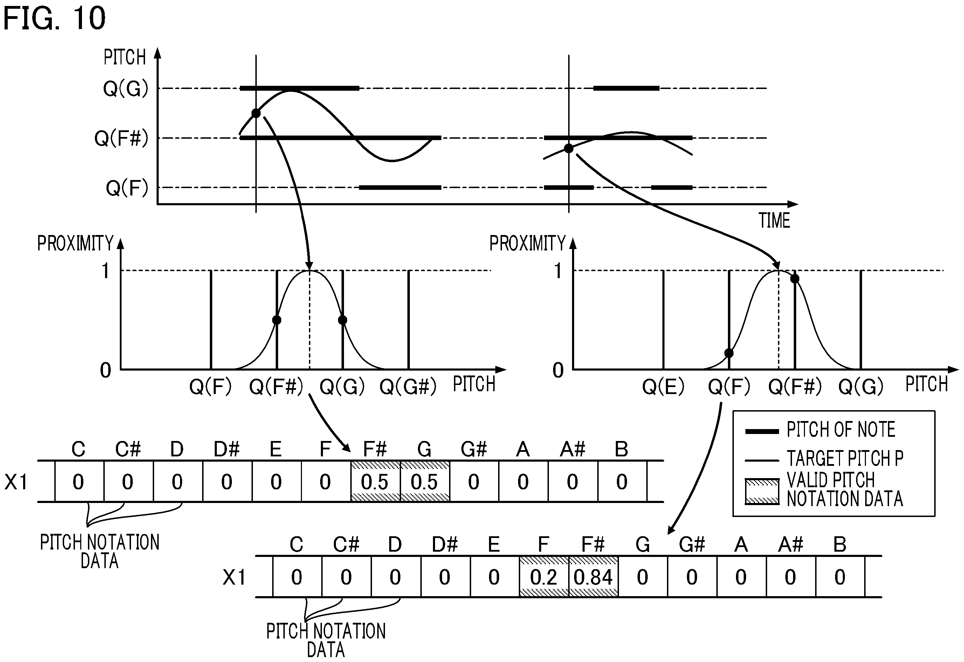

In the second and third embodiments, the degree of proximity between the target pitch P and the reference pitch Q varies linearly within a range of from 0 to 1 according to the pitch difference that exists therebetween in the cent scale. However, the degree of proximity may instead decrease from 1 to 0 dependent on a curve, such as a probability distribution (e.g., a normal distribution as shown in Fig. 10) or a cosine curve, or a broken line.

In the first and second embodiments, pitch names are mapped on the cent scale. However, pitch names may be mapped on any other scale that expresses a pitch, such as a Hertz scale. In this case, an appropriate value in each scale should be used as the deviation value.

In the first and second embodiments, the degree of proximity is scaled in a range of from 0 to 1 in the signal processor 113 or 121, but the degree of proximity may be scaled using any workable value. For example, the degree of proximity may be scaled from -1 to +1.

A sound signal V to be synthesized by the sound signal synthesis system 100 is not limited to instrumental sounds or voices. The present disclosure may be applied to dynamically control pitches even if a sound signal S to be synthesized is a vocalized animal sound or a natural sound such as that of wind in air or a wave in water.

### Description of Reference Signs

100... sound signal generation apparatus, 11...control device, 12...storage device, 13...display device, 14...input device, 15...sound output device, 111 ...analyzer, 112...time aligner, 113...signal processor, 114...trainer, 121...signal processor, 122...generator, 123...synthesizer.

## Claims

1. A computer-implemented sound signal synthesis method comprising:
generating first pitch data indicative of a pitch of a first sound signal to be synthesized; and
using a generative model to estimate output data indicative of the first sound signal based on the generated first pitch data, the generative model having learned a relationship between:
second pitch data indicative of a pitch of a second sound signal; and
the second sound signal,
wherein:
the first pitch data includes a plurality of pieces of pitch notation data corresponding to different pitch names, and
the first pitch data is generated by setting, from among the plurality of pieces of pitch notation data, a piece of pitch notation data that corresponds to the pitch of the first sound signal, as a hot value based on a difference between a reference pitch of a pitch name corresponding to the piece of pitch notation data and the pitch of the first sound signal.

2. The sound signal synthesis method according to claim 1, wherein the first pitch data is generated by setting, from among the plurality of pieces of pitch notation data, pieces of pitch notation data other than the piece of pitch notation data corresponding to the pitch of the first sound signal, as cold values that indicate that the pieces of pitch notation data are not relevant to the pitch of the first sound signal to be generated.

3. The sound signal synthesis method according to claim 1 or claim 2, wherein:
the pitch of the first sound signal varies dynamically, and
the first pitch data represents the pitch that varies dynamically in the first sound signal.

4. The sound signal synthesis method according to any one of claims 1 to 3, wherein:
the pitch of the second sound signal varies dynamically,
the second pitch data represents a pitch that dynamically varies in the second sound signal, and
the generative model is trained using the second sound signal and the second pitch data.

5. The sound signal synthesis method according to any one of claims 1 to 3, wherein the pitch of the first sound signal varies dynamically during a sound period corresponding to a single pitch name, and the hot value set for the piece of pitch notation data that corresponds to the pitch of the first sound signal varies based on the varying pitch.

6. The sound signal synthesis method according to any one of claims 1 to 5, wherein the piece of pitch notation data corresponding to the pitch of the first sound signal comprises a piece of pitch notation data of a pitch name that corresponds to a single unit range including the pitch of the first sound signal, from among a plurality of unit ranges corresponding to the different pitch names.

7. The sound signal synthesis method according to any one of claims 1 to 5, wherein the piece of pitch notation data corresponding to the pitch of the first sound signal comprises two pieces of pitch notation data of pitch names that correspond to two respective reference pitches sandwiching the pitch of the first sound signal, from among a plurality of reference pitches corresponding to the different pitch names.

8. The sound signal synthesis method according to any one of claims 1 to 5, wherein the piece of pitch notation data corresponding to the pitch of the first sound signal comprises N pieces of pitch notation data corresponding to respective N reference pitches (N is a natural number equal to or greater than 1) that are close to the pitch of the first sound signal, from among a plurality of reference pitches corresponding to the different pitch names.

9. The sound signal synthesis method according to any one of claims 1 to 8, wherein the output data to be estimated represents features related to a waveform spectrum of the first sound signal.

10. The sound signal synthesis method according to any one of claims 1 to 8, wherein the output data to be estimated represents a sample of the first sound signal.

11. A computer-implemented method of training a generative model comprising:
preparing pitch data that represents a pitch of a sound signal to be synthesized; and
training the generative model so that output data representing the sound signal is output according to input of the pitch data,
wherein:
t he pitch data includes a plurality of pieces of pitch notation data corresponding to different pitch names, and
t he pitch data is prepared by setting, from among the plurality of pieces of pitch notation data, a piece of pitch notation data that corresponds to the pitch of the sound signal as a hot value based on a difference between a reference pitch of a pitch name corresponding to the piece of pitch notation data and the pitch of the sound signal.

12. A sound signal synthesis system comprising:
one or more processors; and
one or more memories,
wherein:
t he one or more memories are configured to store a generative model that has learned a relationship between second pitch data indicative of a pitch of a second sound signal and the second sound signal, and
t he one or more processors are configured to:
generate first pitch data indicative of a pitch of a first sound signal to be synthesized; and
use the generative model to estimate output data indicative of the first sound signal based on the generated first pitch data,
wherein:
t he first pitch data includes a plurality of pieces of pitch notation data corresponding to different pitch names, and
t he first pitch data is generated by setting, from among the plurality of pieces of first pitch notation data, a piece of pitch notation data that corresponds to the pitch of the first sound signal as a hot value based on a difference between a reference pitch of a pitch name corresponding to the piece of first pitch notation data and the pitch of the first sound signal.

13. A program for causing a computer to function as:
a processor configured to generate first pitch data representing a pitch of a first sound signal to be synthesized; and
a generator configured to use a generative model to estimate output data indicative of the first sound signal based on the first pitch data, the generative model having learned a relationship between:
second pitch data indicative of a pitch of a second sound signal; and
the second sound signal,
wherein:
t he first pitch data includes a plurality of pieces of pitch notation data corresponding to different pitch names, and
t he first pitch data is generated by setting, from among the plurality of pieces of pitch notation data, a piece of pitch notation data corresponding to the pitch of the first sound signal as a hot value based on a difference between a reference pitch of a pitch name corresponding to the pitch notation data and the pitch of the first sound signal.
